# EUROPÄISCHE PATENTSCHRIFT

(11) **EP 0 809 927 B1**
(45) Veröffentlichungstag und Bekanntmachung des Hinweises auf die Patenterteilung: **14.02.2001**
(21) Anmeldenummer: 97106978.6
(22) Anmeldetag: 26.04.1997
(51) Int. Cl.: A01B 71/06, A01B 73/04, A01D 69/08, F16D 3/18, F16H 1/00

(54) **Trennbare gelenkige Klauenkupplung**
Separable articulated claw coupling
Embrayage articulé et séparable, à griffes

(30) Priorität: 29.05.1996 DE 29609520 U
(43) Veröffentlichungstag der Anmeldung: 03.12.1997
(73) Patentinhaber: Fella-Werke GmbH, D-90537 Feucht (DE)
(72) Erfinder: Kohl, Bernhard, 90537 Feucht (DE); Pürrer, Josef, 90537 Feucht (DE)
(74) Vertreter: Matschkur, Lindner Blaumeier Patent- und Rechtsanwälte

(56) Entgegenhaltungen:
- EP-A- 0 296 666
- EP-A- 0 370 933
- EP-A- 0 772 970
- DE-A- 1 507 338
- GB-A- 2 004 026

## Beschreibung

Die Erfindung bezieht sich auf eine trennbare Klauenkupplung, insbesondere zum Antrieb von Heumaschinen mit gelenkig aneinander angelenkten Rahmenteilen, wobei die Schwenkachse des Rahmengelenks in Abstand von der Rotationsachse der Kupplung angeordnet ist.

Damit sich die einzelnen Arbeitselemente von Heumaschinen mit großer Arbeitsbreite den Bodenunebenheiten anpassen können, sind diese an gelenkig miteinander verbundenen Rahmenteilen angeordnet. Die in den Rahmenteilen laufenden Antriebswellen sind an den Gelenkstellen durch Kupplungen verbunden, welche in Betriebsstellung die zur Bodenanpassung erforderliche Winkelabweichung (Abknickung) des Antriebsstranges zulassen, siehe EP-A-370933. Zur Verringerung der Transportbreite werden die äußeren Rahmenteile nach oben oder nach hinten verschwenkt. Dabei ist es vorteilhaft, wenn die Wellenkupplungen getrennt werden, so daß sich die einzelnen Arbeitsorgane (z.B. Rechkreisel) unabhängig voneinander bewegen können. Beim Zurückschwenken in die Arbeitsstellung müssen die Kupplungen wieder in einer bestimmten Lage zueinander eingreifen, damit der Synchronlauf der ineinandergreifenden Zettkreisel gewährleistet ist.

Bei den bisher bekannten Ausführungen wie DP 1 266 556 oder DBGM 9306787 werden Klauenkupplungen verwendet, welche beim Verschwenken der Rahmenteile in die Transportstellung außer Eingriff gelangen. Beim Umstellen in die Arbeitsstellung müssen die beiden Kupplungsteile so zueinander positioniert werden, daß die Kupplungsklauen ineinandergreifen können. Dieses ist problemlos möglich, wenn wie bisher üblich der Umstellvorgang von Hand durchgeführt wird, und dabei die Kreisel zueinander in die geeignete Stellung gedreht werden.

Zur Erhöhung des Bedienungskomforts wird auch für derartige Maschinen verlangt, daß der Umstellvorgang ohne Kraftanstrengung vom Schleppersitz aus mit hydraulischen Stellgliedern durchgeführt werden kann. Solche hydraulische Umstellvorrichtungen sollten auch als Sonderausrüstungen an handbetätigte Maschinen nachrüstbar sein. Bei Maschinen, welche mit bisher bekannten Klauenkupplungen ausgerüstet sind, ist jedoch eine derartige hydraulische Betätigung nicht möglich, da die Klauenkupplungen nicht in jeder Position ineinandergreifen können und bei ungünstiger Stellung durch die Kraft der Hydrozylinder zerstört werden.

Der Erfindung liegt daher die Aufgabe zugrunde, eine trennbare gelenkige Klauenkupplung der eingangs genannten Art so auszugestalten, daß beim Einschwenken der Kupplung in die Arbeitsstellung das Ineinandergreifen der Klauenkupplungsteile unabhängig von der jeweiligen Stellung dieser Teile relativ zueinander möglich ist.

Zur Lösung dieser Aufgabe sind erfindungsgemäß die Merkmale des Anspruchs 1 vorgesehen.

Durch die erfindungsgemäße Ausgestaltung, bei der die einzelnen Mitnehmerkörper nach vorne zum freien Ende hin spitz auslaufen, kann ein blockierendes Aufeinandertreffen der Mitnehmerkörper praktisch nicht vorkommen, da selbst bei einem Aufeinandertreffen der Spitzen zweier Mitnehmerkörper der Klauenkupplungsteile diese aneinander abgleiten können, wobei sie sich dann jeweils in um 90° verdrehte Stellungen verdrehen, die der Kupplungsbetriebsstellung entsprechen. Noch sicherer läßt sich die Gefahr einer Blockierung beim Zusammenfahren der Klauenkupplungsteile infolge des Schwenkens der aneinander angelenkten Rahmenteile in die gestreckte Arbeitsposition in Ausgestaltung der Erfindung dadurch vermeiden, daß an einer Klauenkupplungshälfte wenigstens ein Mitnehmerkörper kürzer ausgebildet ist als der (die) andere(n).

Um bei der Verwendung einer erfindungsgemäßen trennbaren gelenkigen Klauenkupplung für den Antrieb von Heumaschinen zu vermeiden, daß beim Schwenken der Rahmenteile in die Betriebsstellung die Kreiseleinheiten mit ihren Zinken blockierend aufeinanderfahren können, kann in Weiterbildung der Erfindung vorgesehen sein, daß der Schwenkwinkel a der Rahmenteile, ab dem die Klauenkupplungsteile in Eingriff stehen, kleiner ist als der Schwenkwinkel, ab dem sich die zugeordneten Kreiseleinheiten überdecken.

Durch diese Ausgestaltung erfolgt zunächst das Einkuppeln der Klauenkupplungsteile, wodurch automatisch die Kreiseleinheiten ebenfalls in eine Position verdreht werden, bei denen die Zinken des einen Kreisels in Lücken zwischen Zinken des anderen Kreisels eingreifen, so daß beim Weiterverschwenken die angesprochene Blockierung niemals stattfinden kann.

Die Mitnehmerkörper sind so gestaltet, daß sie bei den im Betrieb möglichen Abwinklungen der Rahmenteile gegeneinander stets voll in Eingriff stehen und so eine Drehbewegung möglichst spielfrei übertragen können.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: die Rückansicht eines Kreiselzettwenders mit erfindungsgemäßen trennbaren Klauenkupplungen, wobei gestrichelt die hochgeschwenkte Nichtarbeitsstellung der äußeren Rahmenteile mit den daran befestigten Kreiseleinheiten mit eingezeichnet ist,
- Fig. 2: eine vergrößerte Ansicht der in Eingriffstellung befindlichen Klauenkupplungsteile,
- Fig. 3: einen Schnitt längs der Linie III-III in Fig. 2,
- Fig. 4: eine vergrößerte Ansicht des Gelenkbereichs zwischen zwei Rahmenteilen in der Stellung, in der die Kupplungsteile gerade außer Eingriff gelangt sind,
- Fig. 5: eine der Fig. 2 entsprechende vergrößerte Ansicht der Klauenkupplung, bei der das mögliche Winkelspiel der Rahmenteile gegeneinander eingezeichnet ist,
- Fig. 6: eine vergrößerte Ansicht der Kupplung beim Aufeinanderfahren "Spitze auf Spitze" der Mitnehmerkörper der Klauenkupplungsteile, und
- Fig. 7: eine Draufsicht auf die Klauenkupplung entsprechend Fig. 6 von oben, wobei abweichend von der Anordnung nach Fig. 6 einer der Mitnehmerkörper des linken Klauenkupplungsteils kürzer ausgebildet ist als der andere.

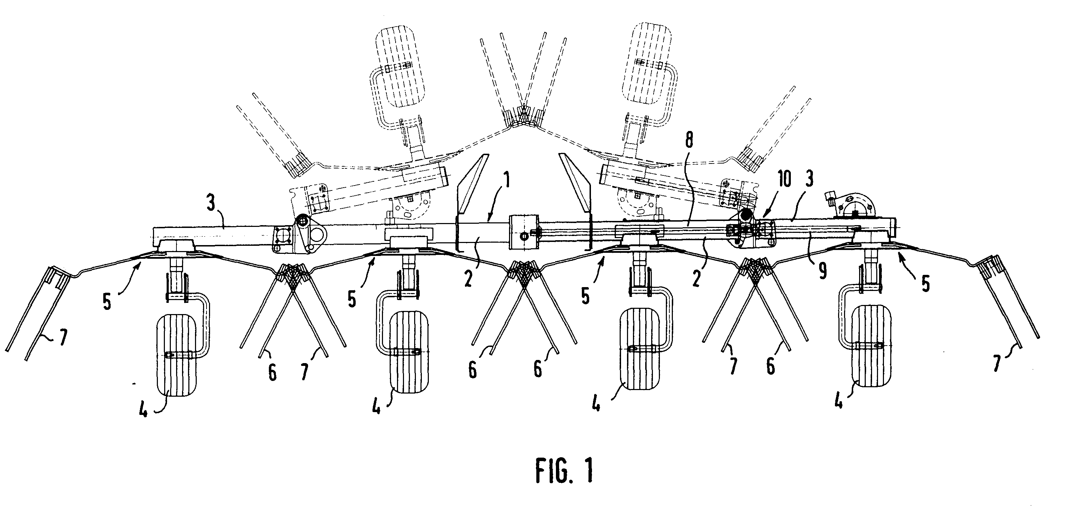

Der in Fig. 1 schematisch von hinten gezeigte Kreiselzettwender umfaßt einen Rahmen 1 mit zwei inneren Rahmenteilen 2 und zwei gelenkig daran angelenkten, nach oben in die gestrichelte Fahr- oder Nichtgebrauchstellung schwenkbaren äußeren Rahmenteilen 3, wobei an jedem der Rahmenteile 2 und 3 ein Laufrad 4 und eine Kreiseleinheit 5 mit in der Betriebsstellung nach Fig. 1 kämmend ineinander eingreifenden Zinkengruppen 6, 7 angeordnet ist. Von einem gemeinsamen nicht gezeichneten Antrieb in der Deichsel zum Zugfahrzeug werden die einzelnen Kreisel 5 durch Antriebswellen 8, 9 angetrieben, die im Bereich der Gelenke 10 zwischen den inneren und äußeren Rahmenteilen 2, 3 über trennbare gelenkige Klauenkupplungen miteinander verbunden sind.

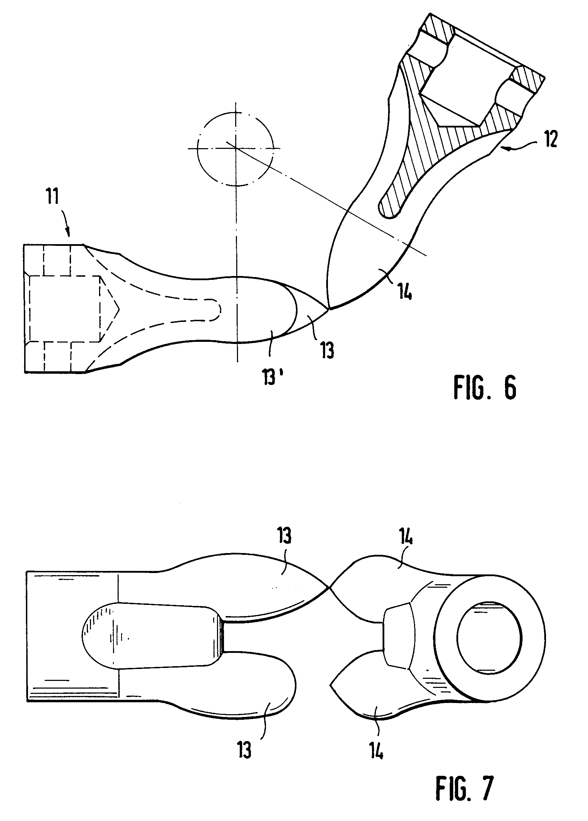

Die im wesentlichen gleich ausgebildeten Klauenkupplungsteile 11 und 12 umfassen dabei im dargestellten Ausführungsbeispiel jeweils zwei zur jeweiligen Antriebswelle 8, 9 parallele beabstandete spindelfömige Mitnehmerkörper 13 und 14, wobei gemäß einer bevorzugten in Fig. 7 dargestellten Ausführungsform einer der Mitnehmerkörper 13' kürzer ausgebildet ist als der andere Mintnehmerkörper 13, so daß beim Einkuppelvorgang, wie er in Fig. 6 gezeigt ist, bei einer Stellung nicht jeweils beide Spitzen der Mitnehmerkörper aneinanderstoßen können und sich dadurch die Kupplungshälften nicht gegenseitig am Eindrehen in die Kuppelposition behindern können.

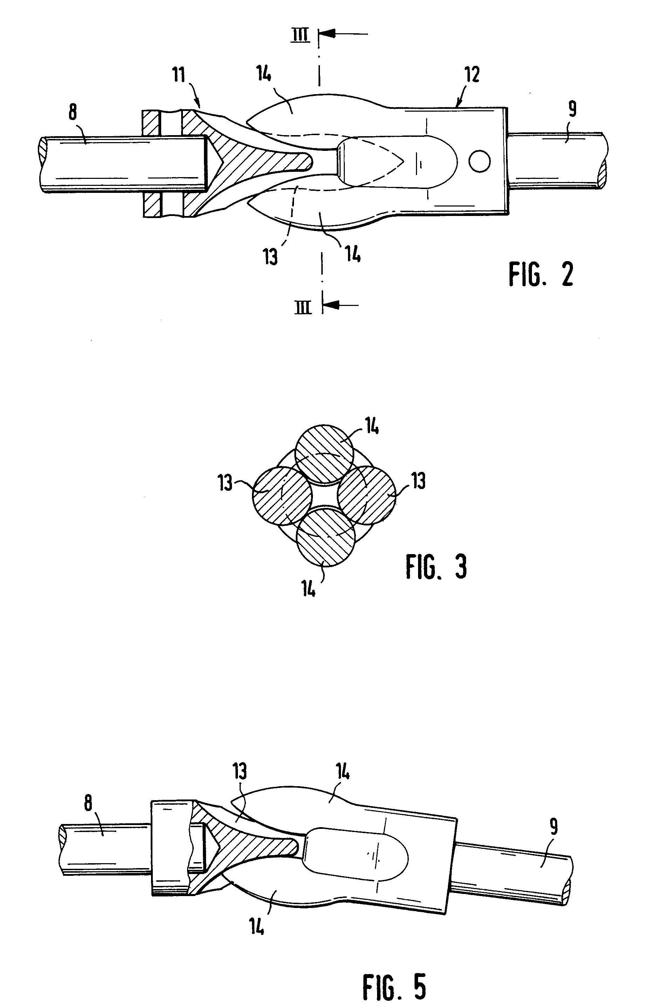

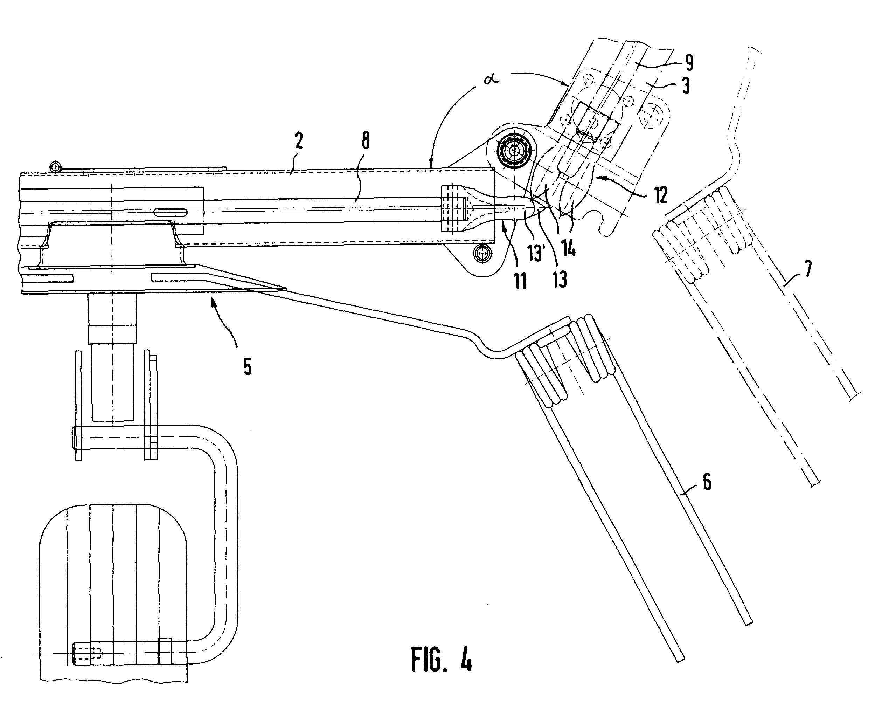

In Fig. 5 ist angedeutet, daß die Form der spindelförmigen Mitnehmerkörper 13, 14 so gewählt ist, daß auch unter Berücksichtigung der im Betrieb möglichen Abwinklungen der Rahmenteile 2, 3 gegeneinander, was zu einer entsprechenden Abwinklung auch der Antriebswellen 8, 9 führt, die Mitnehmerkörper stets voll in Eingriff stehen und so eine Drehbewegung möglichst spielfrei übertragen können.

Aus Fig. 4 erkennt man darüber hinaus, daß die Ausbildung so getroffen ist, daß der Schwenkwinkel a des äußeren Rahmenteils 3 gegenüber dem inneren Rahmenteil 2, bei welchem das Ein- bzw. Auskuppeln der Mitnehmerkörper 13, 14 stattfindet, kleiner ist als der Schwenkwinkel, ab dem die Zinken 6, 7 der an den Rahmenteilen 2 und 3 befestigten Kreiseleinheiten 5 ineinandergreifen. Dadurch ist sichergestellt, daß zunächst die Mitnehmerkörper 13, 13'; 14 der Klauenkupplungsteile 11, 12 sich beim Zusammenfahren in die um 180° gegeneinander verdrehte Position gemäß Fig. 3 gebracht haben und damit auch die zugehörigen Kreiseleinheiten 5 derart verdreht haben, daß ihre Zinken zum gegenseitigen Eingriff gegeneinander versetzt sind, so daß beim weiteren Herunterklappen des äußeren Rahmenteils 3 gegenüber dem inneren Rahmenteil 2 eine Blockierung der Kreiseleinheiten durch Aufeinanderfahren der Zinkenteile 6, 7 sicher verhindert ist.

## Patentansprüche

1. Trennbare Klauenkupplung, insbesondere zum Antrieb von Heumaschinen mit gelenkig aneinander angelenkten Rahmenteilen, wobei die Schwenkachse des Rahmengelenks in Abstand von der Rotationsachse der Kupplung angeordnet ist, dadurch gekennzeichnet, daß jedes der beiden im wesentlichen gleich aufgebauten Klauenkupplungsteile (11, 12) nur zwei beabstandete, zur jeweiligen Antriebswelle (8, 9) im wesentlichen parallele spindelförmige Mitnehmerkörper (13, 13'; 14) aufweist und daß die Mitnehmerkörper (13, 13'; 14) so gestaltet sind, daß sie bei den im Betrieb möglichen Abwinklungen der Rahmenteile (2, 3) gegeneinander voll in Eingriff stehen.

2. Trennbare Klauenkupplung nach Anspruch 1, dadurch gekennzeichnet, daß der Schwenkwinkel a der Rahmenteile (2, 3), ab dem die Klauenkupplungsteile (11, 12) in Eingriff stehen, kleiner ist als der Schwenkwinkel, ab dem sich die zugeordneten Kreiseleinheiten (5) überdecken.

3. Trennbare Klauenkupplung nach einem der Ansprüche 1 bis 2, dadurch gekennzeichnet, daß an einer Kupplungshälfte wenigstens ein Mitnehmerkörper (13') kürzer ausgebildet ist als der andere Kupplungskörper (13).

## Claims

1. Separable claw clutch, in particular for driving hay machines having frame parts coupled together pivotably, wherein the pivotal axis of the frame hinge is disposed at a distance from the axis of rotation of the clutch, characterised in that each of the two claw clutch parts (11, 12) of identical construction has only two spaced, spindle-shaped driver bodies (13, 13'; 14), which are substantially parallel to the respective drive shaft (8, 9) and in that the driver bodies (13, 13'; 14) are so formed that they are fully in mesh with one another at the angles of the frame parts (2, 3) possible in operation.

2. Separable claw clutch according to claim 1, characterised in that the pivotal angle a of the frame parts (2, 3) starting from which the claw clutch parts (11, 12) mesh, is smaller than the pivotal angle starting from which the associated gyratory units (5) overlap.

3. Separable claw clutch according to one of claims 1 to 2, characterised in that on one clutch half, at least one driver body (13') is formed shorter than the other clutch body (13).

## Revendications

1. Accouplement à griffes séparable, notamment destiné à l'entraînement de machines de fenaison comprenant des parties de châssis reliées les unes aux autres de manière articulée, l'axe de pivotement de l'articulation de châssis étant placé à distance de l'axe de rotation de l'accouplement, caractérisé en ce que chacune des deux parties d'accouplement à griffes (11, 12) de construction sensiblement identique, ne comporte que deux corps d'entraînement (13, 13'; 14) espacés, en forme de broche et sensiblement parallèles à l'arbre d'entraînement respectif (8, 9), et en ce que les corps d'entraînement (13, 13'; 14) sont conçus de façon telle qu'ils soient en prise réciproque totale pour toutes les positions angulaires possibles en fonctionnement, des parties de châssis (2, 3) l'une par rapport à l'autre.

2. Accouplement à griffes séparable selon la revendication 1, caractérisé en ce que l'angle de pivotement α des parties de châssis (2, 3), à partir duquel les parties d'accouplement à griffes (11, 12) sont en prise, est inférieur à l'angle de pivotement à partir duquel les unités de toupie (5) associées interfèrent mutuellement.

3. Accouplement à griffes séparable selon l'une des revendications 1 à 2, caractérisé en ce que sur une moitié d'accouplement, au moins un corps d'entraînement (13') est réalisé plus court que l'autre corps d'accouplement (13).
